(19) Europäisches Patentamt / European Patent Office / Office européen des brevets

(11) **EP 2 911 109 B1**

(12) **EUROPEAN PATENT SPECIFICATION**

(45) Date of publication and mention
of the grant of the patent:
**21.02.2018 Bulletin 2018/08**

(51) Int Cl.:
***G06Q 50/06*** *(2012.01)*

(21) Application number: **14156114.2**

(22) Date of filing: **21.02.2014**

(54) **Method and system for identifying energy consumers**

Verfahren und System zur Identifizierung von Energieverbrauchern

Procédé et système permettant d'identifier des consommateurs d'énergie

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**26.08.2015 Bulletin 2015/35**

(73) Proprietor: **Discovergy GmbH
52076 Aachen (DE)**

(72) Inventors:
 • **Weidmann, Philipp Emanuel
 Bhopal-462042 (MP) (IN)**
 • **Eisele, Martin
 88512 Mengen (DE)**

(74) Representative: **Bittner, Peter et al
Peter Bittner und Partner
Seegarten 24
69190 Walldorf (DE)**

(56) References cited:
 **US-A1- 2013 158 908**

 • **Anonymous: "Overview (FREJ - Fuzzy Regular Expressions for Java)", , 26 February 2013 (2013-02-26), XP055126311, Retrieved from the Internet: URL:https://web.archive.org/web/2013022602 5514fw_/http://frej.sourceforge.net/javado cs/overview-summary.html [retrieved on 2014-07-02]**

 • **YAO-CHUNG FAN ET AL: "Efficient Time Series Disaggregation for Non-intrusive Appliance Load Monitoring", UBIQUITOUS INTELLIGENCE&COMPUTING AND 9TH INTERNATIONAL CONFERENCE ON AUTONOMIC&TRUSTED COMPUTING (UIC/ATC), 2012 9TH INTERNATIONAL CONFERENCE ON, IEEE, 4 September 2012 (2012-09-04), pages 248-255, XP032255094, DOI: 10.1109/UIC-ATC.2012.122 ISBN: 978-1-4673-3084-8**

 • **MICHAEL ZEIFMAN ET AL: "Nonintrusive appliance load monitoring: Review and outlook", IEEE TRANSACTIONS ON CONSUMER ELECTRONICS, IEEE SERVICE CENTER, NEW YORK, NY, US, vol. 57, no. 1, 1 February 2011 (2011-02-01), pages 76-84, XP011478006, ISSN: 0098-3063, DOI: 10.1109/TCE.2011.5735484**

 • **Anonymous: "Quantization (signal processing) - Wikipedia", , 4 February 2014 (2014-02-04), XP055355127, Retrieved from the Internet: URL:https://en.wikipedia.org/w/index.php?t itle=Quantization_(signal_processing)&oldi d=593938364 [retrieved on 2017-03-15]**

 • **Anonymous: "Regular expression - Wikipedia", , 19 February 2014 (2014-02-19), XP055355130, Retrieved from the Internet: URL:https://en.wikipedia.org/w/index.php?t itle=Regular_expression&oldid=596110832 [retrieved on 2017-03-15]**

 • **Ahmed Zoha ET AL: "Non-Intrusive Load Monitoring Approaches for Disaggregated Energy Sensing: A Survey", Sensors, vol. 12, no. 12, 6 December 2012 (2012-12-06), pages 16838-16866, XP055109922, ISSN: 1424-8220, DOI: 10.3390/s121216838**

**Description**

**Technical Field**

The present invention generally relates to electronic data processing, and more particularly, relates to methods, computer program products and systems for Non-Intrusive Appliance Load Monitoring.

**Background**

In application scenarios where aggregate resource consumption data is tracked over time for an entity by an appropriate metering device often there is a need to break down the aggregate consumption data to a plurality of consumers. However, normally no resource consumption data is available at the level of the individual consumers. The problem is generally known as Non-Intrusive Appliance Load Monitoring. For example, an entity may be a household, a production plant, a warehouse, a building, or any other entity which is associated with a plurality of resource consumers. The consumed resource may be related to energy. The consumers are energy consuming devices. The consumed resource may be electrical energy, gas, oil, heat, water, or any other energy carrying resource. For example, power values sampled from a household's total load curve need to be analyzed to infer information about the individual appliances being used in that household, such as device type (including make and model), activity timeline and individual power consumption of the respective device. For example, for optimization of energy consumption within the entity a disaggregation of the total energy consumption is needed which allows identifying the electronic consumer devices regarding their individual consumption and how they contribute to the overall energy consumption of the entity at any given point in time.

In the prior art approaches are known to break down aggregate energy data of an entity to the energy consumers by using methods such as curve fitting, regression methods, Clustering, Factorial Hidden Markov Models, neural networks, or other artificial intelligence approaches. The existing approaches typically are complex, computationally costly (often using Fourier analysis or wavelet decomposition), hard to parallelize because they always need to process all data of a given time interval, and sometimes show low accuracy regarding the capability to identify energy consuming devices in cases where there is a greater number of devices associated with the entity.

As an example of a prior art solution, the patent application US2013/158901 A1 discloses a system for identifying components of a time varying electrical power signal corresponding to activation or deactivation of a predetermined number of electrical devices by generating signatures for the activation events and signatures for the deactivation events. Then, the signatures are clustered to identify activations and deactivations of each device in the predetermined number of devices and a particular device is identified which corresponds to one particular signature in the clustered activation signatures and to one particular signature in the clustered deactivation signatures. Another example is disclosed in the article "Efficient Time Series Disaggregation for non-intrusive Appliance Load Monitoring" by Yao-Chung Fan et al. (Ubiquitous Intelligence and Computing, 2012). The article presents a theoretical and relatively abstract framework for appliance recognition with an algorithm which works with the "global power load time series" itself by using integers as power values.

**Summary**

Therefore, there is a need to improve the identification of energy consumers with regards to the above mentioned problems. The solution is provided by a computer system, a computer implemented method and a computer program product as described in the independent claims.

In one embodiment, a computer system for identifying energy consumers includes an interface component which is configured to receive at a sampling rate a series of aggregate energy measurement data associated with an entity. Energy measurement data as used hereinafter refers to data that is transformable into power data including power data itself and all of its integrals and derivatives. Thereby, energy may be provided to energy consuming devices through different resources which are consumed by the energy consumers. For example, energy may be provided as electrical energy, gas, oil, heat, water, or the like. The aggregate energy consumption of the consumer devices can be measured through appropriate metering devices known in the art, such as for example, energy or power meters, gas meters, oil meters, water meters, heat meters, etc.

For example, the sampling rate can be in a low frequency range around 1 Hz although higher frequencies can be used. Using low sampling frequencies results in less measurement data which allows reducing bandwidth requirements in scenarios where the energy measurement data is communicated over some kind of network connection (e.g., LAN, wireless networks, WLAN, telephone lines, Internet, etc.) to the computer system. Variable or piecewise fixed sampling rates may also be selected by a person skilled in the art. The computer system itself may be remote from the entity or may be integrated within the entity (e.g., as an integral part of a power meter measuring the energy data). The measurement data may be received directly form a respective energy metering device or they may be received through a web interface, a database, or the like.

The series of measurement data reflects aggregate energy values over time of energy consuming devices associated with the entity. For example, in case the entity being a household the energy consuming devices can include refrigerators, microwaves, illumination devices, heating devices, etc. In case the entity being a factory the energy consuming devices can include all kinds of different production equipment. The aggregate energy value of the entity at any point in time includes all the individual energy values of the energy consuming devices being active at the time.

A transformation component of the computer system then determines a discretized time derivative value of the series of measurement data for each sampling time point. The time derivative value at each sampling point is a measure for the fluctuation of the energy measurement data over time. Discretized as used hereinafter, means that the potentially infinite number time derivative values is reduced to a set of discrete values. For example, this can be achieved by rounding the time derivative values to certain allowed values. As a consequence, the discretized time derivative values are limited to a finite value range. One side effect of the discretization the time derivative values is that values below a certain threshold are perceived to be noise thus implementing a low-pass filter for the time derivative values. Further, the discretized time derivative values are independent from each other. That is, a first discretized time derivative value at a particular first sampling time point can be computed completely independently from a second discretized time derivative value at a particular second sampling time point. As a consequence, any further processing of the discretized time derivative values, such as the later disclosed pattern recognition, is fully parallelizable for any data set with respect to any arbitrary time interval. This is an advantage compared to approaches working in the frequency spectrum where always the full data set needs to be processed (e.g., Fourier transformed data sets - in contrast to the proposed solution working on amplitudes in the time dimension). In the suggested solution any subset of data can be analyzed without loss of information because of the independency of the data points.

In one embodiment, the transformation component can determine a particular discretized time derivative value of the original measurement data at a particular sampling time point by first determining a particular time derivative value at the particular sampling time point as a difference between the amplitude of the aggregate energy value at the particular sampling time point and the amplitude of the aggregate energy value at the preceding sampling time point. Then the transformation component determines an integral multiple of a selected discretization base, the integral multiple being a closest to the particular time derivative value. Finally the transformation component can replace the particular time derivative value with the determined integral multiple of the predefined discretization base as the particular discretized time derivative value. In this embodiment, the discretization base determines the low-pass filter function for noise. Time derivative values which are below 50% of the discretization base will be rounded to 0 thus eliminating them completely. The transformation component may further vary the selected discretization base dependent on the energy range covered by the energy measurement data. That is, in cases where energy consumers with high energy consumption properties (e.g., vacuum cleaners) are evaluated a higher discretization base may be selected than in cases where the energy consumers have low energy consumption properties (e.g., a TV or monitor in standby). In both scenarios the noise level can be different and thus different discretization bases may be appropriate to correctly identify the respective energy consumer devices. For example, the transformation component can iterate the transformation on the same series of measurement date using multiple discretization bases for different energy ranges with different energy resolution requirements.

A substitution component of the system can now substitute each discretized time derivative value with a corresponding character of a finite alphabet. This substitution generates a string which encodes energy data fluctuations between the sampling time points. The substitution is enabled by reducing the originally infinite value range of time derivative values to the finite value range of the discretized time derivative values. The finite alphabet can be selected accordingly to provide a character for each discretized time derivative value so that a unique mapping between a character of the alphabet and a respective discretized time derivative value can be achieved at each sampling time point.

A pattern recognition component of the system can apply string pattern matching to the generated string to identify a pattern in the string which matches a predefined signature of a specific energy consuming device associated with the entity. The specific energy consuming device is finally reported as an identified energy consumer. The reporting occurs by sending an alarm to a user of the computer system, or by forwarding the alarm to a control unit to trigger the shutdown of the identified energy consumer, in case the energy consumption of the identified energy consumer exceeds a certain threshold value. Various string pattern matching approaches may be used, such as for example, string pattern matching based on regular expressions (e.g., Perl Compatible Regular Expressions (PCRE), International Components for Unicode (ICU) Regular Expressions, Boost.Regex), string pattern matching based on program code which encodes the patterns, or string pattern matching based on Fuzzy Regular Expressions (e.g., TRE regexp matching library, AGREP, Fuzzy Regular Expressions for Java (FREJ)). Software implementations of such string pattern matching techniques are fully parallelizable with regards to the recognition of multiple patterns because of the independence of the underlying data set. For example, each pattern can be processed separately by a parallel instance of the pattern recognition component. As the discretized time derivative values are computed totally independently the substitute characters of the generated string can be computed independently, too. Further, as a consequence, pattern searches performed on the string can be limited to any string size. There is no need to process the full data set. It is sufficient to analyze a limited time history for recognizing a pattern which corresponds to a signature. The signature thereby can provide information about a maximum time interval to be analyzed. In general, a signature is a means for identifying a pattern in a given search space. In one embodiment of the invention, particular signatures are implemented as regular expressions. Details are disclosed in the detailed description. The predefined signatures used by the pattern recognition component describe device specific energy consumption behaviors of the respective energy consumers over time (energy fluctuations). Thereby, the signature can be defined to include tolerances of the behavior, so that, for example, energy spikes are recognized within predefined tolerance intervals. Also the duration (length of the signature) can be defined dynamically.

In one embodiment, a signature can include a plurality of sub-signatures. By using a formal grammar each sub-signature may correspond to a component of the identified energy consumer. The pattern recognition component may recursively substitute the sub-signatures with respective patterns.

The proposed solution does not work in the frequency dimension like, for example, frequency analysis based approaches (e.g., Fourier transformations). Rather the proposed solution works directly on signal amplitudes of the aggregate energy data associated with the respective entity. The proposed solution is computationally efficient and inexpensive, fully parallelizable and the output of the string pattern matching method can be cached for even higher performance. To summarize, the transformation of the original energy consumption data into discretized time derivative values of the original energy amplitudes and the substitution of the discretized values by a discrete finite alphabet facilitates the recognition of device specific patterns in the resulting string in real time because high speed text pattern engines can be used for string pattern recognition. Further, a domain specific language for describing hierarchical signatures allows analyzing complex signatures of component based devices (energy consumers) in real time.

In further embodiments, a computer program product when loaded into a memory of the computer system and executed by at least one processor of the computer system causes the computer system to execute the steps of a respective computer implemented method for performing the above described functions of the computer system.

Further aspects of the invention will be realized and attained by means of the elements and combinations particularly depicted in the appended claims. It is to be understood that both, the foregoing general description and the following detailed description are exemplary and explanatory only and are not restrictive of the invention as described.

**Brief Description of the Drawings**

FIG. 1 is a simplified block diagram of a computer system for identification of energy consumers associated with an entity according to one embodiment of the invention;

FIG. 2A shows an example of sampled energy measurement data related to a particular energy consumer;

FIG. 2B illustrates a particular energy consumer having sub-components;

FIG. 3A shows exemplary energy consumption data over time for three different energy consumers;

FIG. 3B illustrates an exemplary series of aggregate energy measurement data of an entity;

FIG. 4A illustrates a further exemplary series of aggregate energy measurement data of an entity;

FIG. 4B shows time derivative values derived from a further exemplary series of aggregate energy measurement data according to one embodiment of the invention;

FIG. 4C illustrates discretized time derivative values derived with a discretization base according to one embodiment of the invention;

FIG. 4D illustrates character substitution of discretized time derivative values and subsequent string pattern matching for energy consumer identification according to one embodiment of the invention;

FIG. 5 is a simplified flowchart of a computer implemented method according to an embodiment of the invention; and

FIG. 6 is a simplified breakdown of a determining step of the computer implemented method according to and embodiment of the invention.

**Detailed Description**

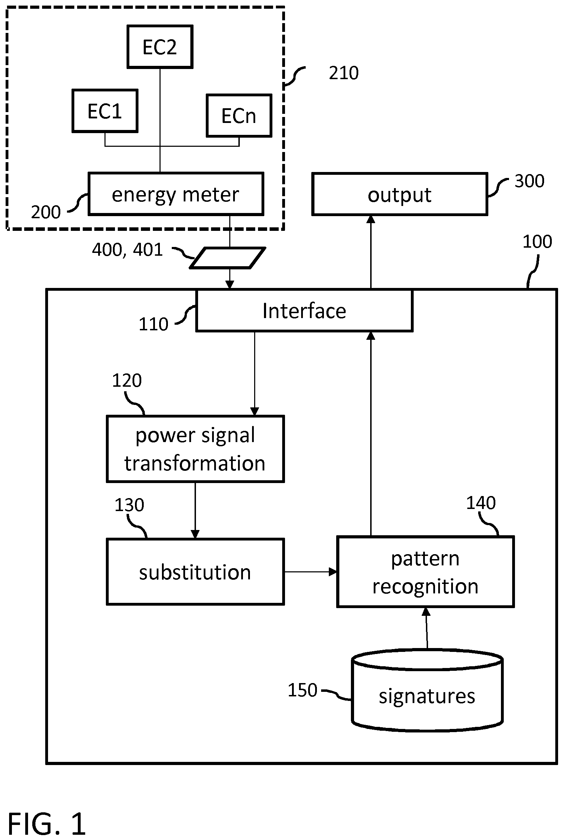

FIG. 1 shows a simplified block diagram of a computer system 100 for identification of energy consumers EC1, EC2, ECn associated with an entity 210 according to one embodiment of the invention. In the example of FIG. 1, the entity 210 may be a household which is equipped with an energy meter or power meter 200. The entity is associated with a plurality of energy consumers, such as for example electric devices like a refrigerator, microwave, oven, light bulbs or any other device consuming electric energy. Typically a plurality of such energy consumers is connected to a single metering device for measuring the aggregate energy consumption of the plurality of devices for which the household is to be billed. Such series of aggregate energy measurement data 400, 401 may be transmitted in real time to the computer system 100. The aggregate energy measurement data 400, 401 may also be stored in a database or may be made available in any other appropriate way (e.g., via a web interface) to the computer system 100.

The computer system 100 can receive the series of aggregate energy measurement data 400, 401 at a sampling rate through the interface 110. The interface 110 is appropriate to receive the aggregate energy data from the respective data source. As one aspect of the invention is related to the identification of individual energy consumers based on the aggregate energy measurement data, a sampling rate may be chosen which uses a time interval between two subsequent sampling time points being small enough for having a high probability that within one sampling interval only a single energy consumer is switched on or off. In other words, the sampling rate may be chosen so that changes of aggregate measurement data between consecutive sampling time points are likely caused by switching on/off a single energy consuming device.

The computer system 100 can be a remote system which is communicatively coupled with the source of the respective data source or it may even be implemented as part of the energy meter 200. Any appropriate degree of partial integration of the computer system with the entity 210 is possible. System 100 can fully or partially be integrated into entity 210.

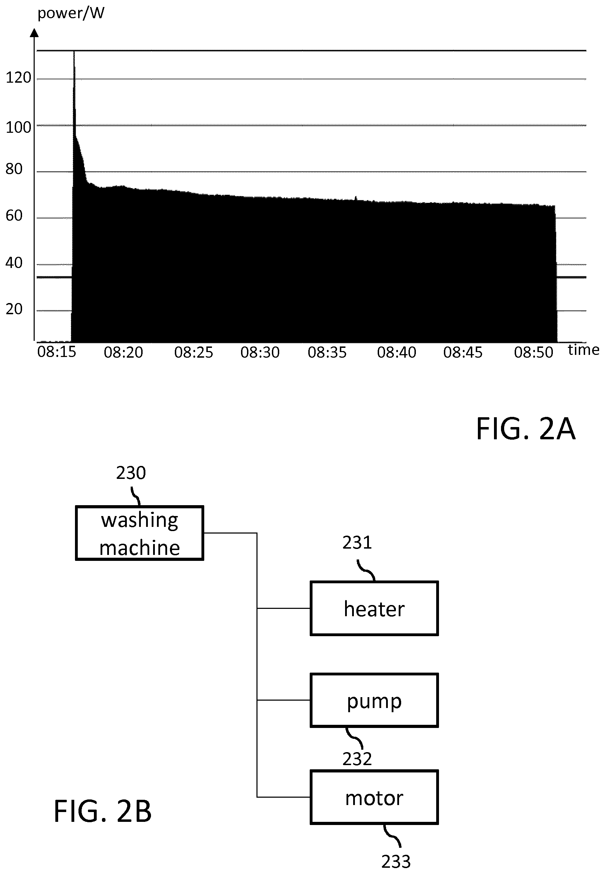

FIG. 1 is now being described by way of example referring to specific embodiments as shown in the FIGs. 2A, 2B, 3A, 3B and 4A-4D. Turning now to FIG. 2A showing an example of sampled energy measurement data related to a particular energy consumer, the particular real-world example of FIG. 2A corresponds to power data of a refrigerator (e.g., EC1, cf. FIG. 1). Refrigerators use a compressor to harness the cooling effect that comes with the phase change of the coolant from a liquid to a gas. When a thermostat determines that the inside temperature of the fridge has risen above the target temperature, it activates the compressor, which first has to overcome the inertia caused by the rotating engine, the coolant and/or the initial current (spike in the power consumption starting shortly after time 8:15) before cycling it for a while until the target temperature is reached. A detailed understanding of the causes of the spike is not relevant. The thermostat then turns the compressor off, resulting in the power curve shown above which captures a single cooling cycle (the horizontal lines in the example are 20 Watts apart). The bold solid line at 35 W in FIG. 2A illustrates an average load of the system. However, this value has no relevance for the conceptual approach as disclosed in this application. The slight decrease in power consumption during the quasi-plateau phase results from continuously decreasing power consumption during the cooling cycle for approaching the target temperature.

The characteristics of this curve can be easily recognized. The characteristics of the example are:

- Spike of ~120 Watts lasting ~1 minute (wherein the spike may be divisible into multiple phases caused by the different types of inertia)
- Followed by a quasi-plateau of ~70 Watts lasting ~35 minutes (wherein minor variations such as a slight power decrease can be neglected)

Such appliance activity patterns can be specified by a human or by automatic classifiers. Humans easily understand appliance load patterns simply by looking at a time-power plot of the appliance's activity. Automatic classification may, for example, be performed by recording load profiles of multiple devices belonging to the same class of devices (e.g., refrigerators) and correlating their respective signatures for automatically identifying energy consumption ranges (e.g., signal amplitude and signal length) which are typical for this device class.

Energy consumers, such as household appliances, may be composed of multiple electric components where each electric component is an energy consumer by itself. FIG. 2B illustrates a washing machine as a particular energy consumer having multiple sub-components 231, 232, 233. Each of the sub-components - the heater 231, the pump 232 and the motor 233 - is associated with an individual appliance activity pattern as disclosed in the context of the compressor of the refrigerator in FIG. 2A. As a consequence the appliance activity pattern related to the washing machine includes aggregate energy data of the respective sub-components.

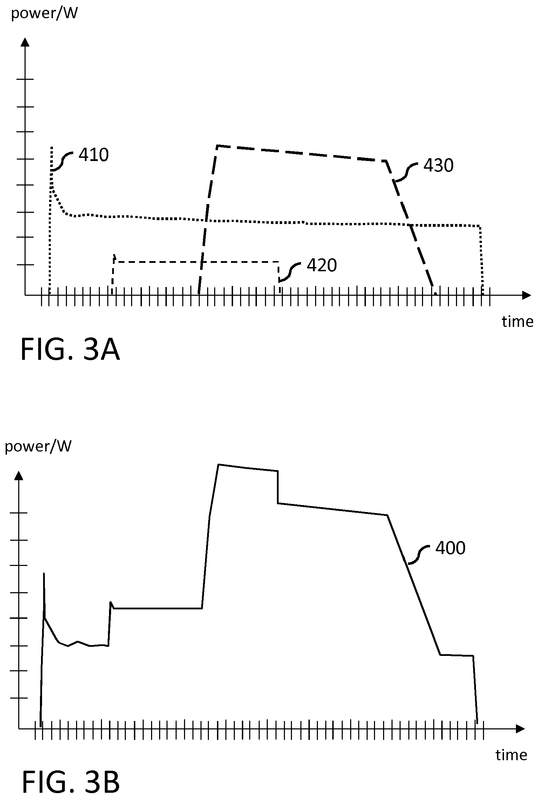

FIG. 3A shows exemplary energy consumption data over time for three different energy consumers. The example shows individual appliance activity patterns over time of a refrigerator 410, a halogen bulb 420 and a microwave 430. The halogen bulb 420 is switched on and off while the compressor of the refrigerator 410 is running. The microwave 430 is switched on while the compressor 410 is running and the halogen lamp is on. It is switched off after the halogen bulb 420 is switched off again but the compressor 410 is still running.

FIG. 3B illustrates the exemplary series of aggregate energy measurement data 400 of the household for the example of FIG. 3A. In other words, FIG. 3B shows the sum of the amplitudes of each individual appliance activity pattern 410, 420, 430 at each point in time. For reasons of simplicity the aggregate energy measurement data 400 is illustrated as a continuous curve. The dashes on the time axis represent the sampling time points at which the interface 110 (cf. FIG. 1) receives the aggregate energy measurement data 400. That is, the series of aggregate energy measurement data received by the computer system 100 at the sampling rate corresponds to the data values of the aggregate amplitudes of the continuous curve 400 at the respective sampling time points. The sampling time points are illustrated schematically by the dashes on the time axis. In a real world scenario there may be more sampling time points than illustrated in the figures.

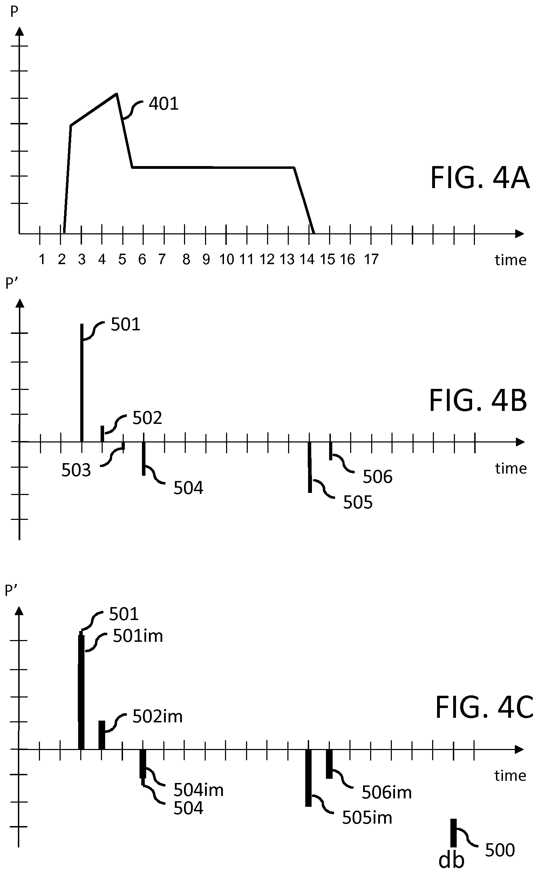

FIG. 4A illustrates a further exemplary series 401 of aggregate energy measurement data of the entity. Again, data received by the interface 110 correspond to the amplitude values of the aggregate energy measurement data at the respective sampling time points illustrated by the dashes on the time axis. The numbers associated with the sampling time point dashes are to be read as indices for the respective time point and do not indicate time values. That is, the index 1 stands for t1, the index 2 for t2 and so on. In the example the received data correspond to power data which may have been measured by the power meter 200 (cf. FIG. 1) of the entity 210.

Turning back to FIG. 1, the transformation component 120 of the computer system determines a discretized time derivative value of the series of measurement data for each sampling time point. FIG. 4B shows time derivative values P' derived from the further exemplary series of aggregate energy measurement data 401 at the respective sampling time points in a first step. Assuming $\Delta t_i := t_i - t_{i-1}$ is independent of i (constant sampling rate), the transformation component computes the finite differences $\Delta P_i := P_i - P_{i-1}$, i = 2,..., N (first derivatives of P at $t_i$ assuming normalized $\Delta t_i$ = 1 and a suitable interpolation function P*).

The time derivative value 501 corresponds to the amplitude delta of the received measurement data 401 between the sampling time points t3 and t2. The time derivative value 502 corresponds to the amplitude delta of the received measurement data 401 between the sampling time points t4 and t3. The time derivative values 503, 504, 505 and 506 can be determined accordingly. Only time derivative values different from 0 are shown with reference numbers. The time derivative value at each sampling point is a measure for the fluctuation of the energy measurement data over time. That is, during the plateau phase from t6 to t13 the time derivative values are 0 and therefore, there is no energy fluctuation in the aggregate energy data during this time interval.

For transforming the time derivative values into discretized time derivative values the transformation component can round the computed time derivative values to certain allowed values. For example, the rounding may be performed as a rounding operation to the closest integer value. As a consequence, the discretized time derivative values are limited to a finite value range. One side effect of the discretization of the time derivative values is that values below a certain threshold are rounded to 0. This function implements an "amplitude low-pass filter" for small time derivative values having an amplitude close to 0 as they are perceived to be noise. That is, this function filters out small time derivative values.

In one embodiment illustrated in FIG. 4C, the transformation component 120 (cf. FIG. 1) can determine a particular discretized time derivative value of the original measurement data at a particular sampling time point by first determining the particular time derivative value 501 at the particular sampling time point t3 as a difference between the amplitude of the aggregate energy value 401 at the particular sampling time point t3 and the amplitude of the aggregate energy value 401 at the preceding sampling time point t2. Then the transformation component 120 can determine an integral multiple 501 im of a selected discretization base db 500, the integral multiple 501 im being a closest to the particular time derivative value 501. Finally the transformation component can replace the particular time derivative value 501 with the determined integral multiple 501 im of the predefined discretization base as the particular discretized time derivative value 501 im. At sampling time point t3 the integral multiple 501 im is rounded down (the time derivative value 501 shown for illustration purposes only is still a bit larger than 4 times the discretization base 500). The discretized time derivative value 502im at t4 is rounded up to one discretization base as the respective time derivative value 502 is more than 50 % of the discretization base 500. At t5 the effect of the "amplitude low-pass filter function" of the discretization base 500 becomes visible. The time derivative value 503 disappears completely form the series of discrete time derivative values as it is smaller than 50% of the discretization base 500. Therefore, in this embodiment, the discretization base determines the low-pass filter function for noise. Time derivative values which are below 50% of the discretization base can be rounded to 0 thus eliminating them completely. The other discretized time derivative values can be computed accordingly.

The discretization base can be chosen as db $\in R^+$. Further, set $\Delta P'_i = \arg\min_{dbn, n \in Z}\{|\Delta P_i - dbn|\}$ (integral multiple of db closest to $\Delta P_i$). Let f: R $\rightarrow$ Z, $f(x) := \frac{x}{db}$. The range of integral multiple values can be determined as M = $\max_{i=2,...,N}|f(\Delta P'_i)|$. That is, the infinite number of time derivative values is now reduced to a finite number according to the range M.

The transformation component may further vary the selected discretization base dependent on the energy range covered by the energy measurement data. That is, in cases where energy consumers with high energy consumption properties (e.g., vacuum cleaners) are evaluated a higher discretization base may be selected than in cases where the energy consumers have low energy consumption properties (e.g., a TV or monitor in standby). In both scenarios the eliminated noise level can be different to correctly identify the respective energy consumer devices. For example, the transformation component can iterate the transformation on the same series of aggregate energy measurement data using multiple discretization bases for different energy ranges with different energy resolution requirements.

Further, the discretized time derivative values are computed independently from each other. That is, a first discretized time derivative value at a particular first sampling time point is computed separately from a second discretized time derivative value at a particular second sampling time point. As a consequence, any further processing of the discretized time derivative values is fully parallelizable for any data set with respect to any arbitrary time interval. That is, in the suggested solution any subset of data can be analyzed without loss of information because of the independent computation of the underlying data points.

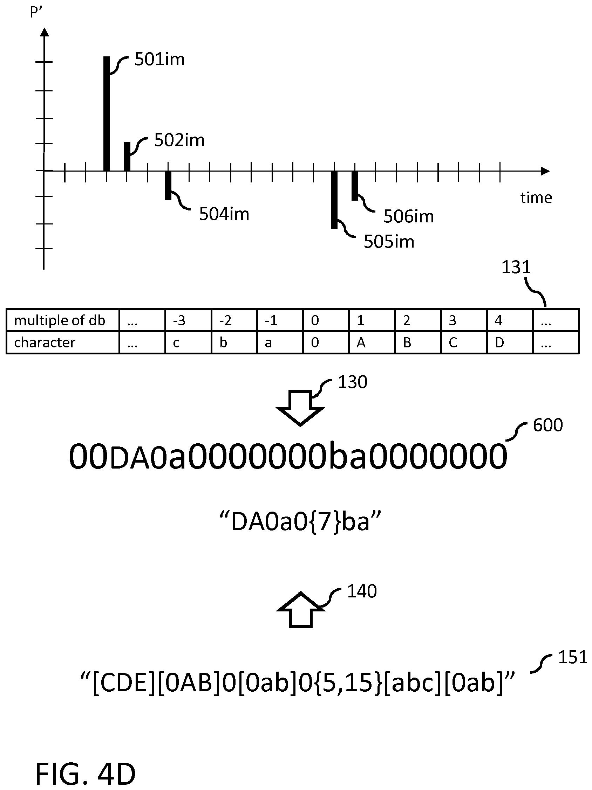

FIG. 4D illustrates character substitution of discretized time derivative values and subsequent string pattern matching for energy consumer identification according to one embodiment of the invention. The substitution component 130 (cf. FIG. 1) of the system 100 can now substitute each discretized time derivative value with a corresponding character of a finite alphabet. In the example a finite alphabet is selected which includes lower case letters a, b, c, ... which are mapped to negative integral multiples -db, -2db, -3db, .... It further includes upper case letters A, B, C, .. which are mapped to positive integral multiples db, 2db, 3db, .... Finally, "0" is mapped to 0. With this finite alphabet [z, ... , a],0,[A, ..., Z] 53 different discretized time derivative values can substituted by the characters of the selected finite alphabet. The finite alphabet can be selected accordingly to provide a character for each discretized time derivative value so that a unique mapping between a character of the alphabet and a respective discretized time derivative value can be achieved at each sampling time point. However, any other alphabet can be used as well. For example, for increasing the number of substitution characters a larger alphabet based on combined characters [AA] to [ZZ] may be used. This substitution generates a string which encodes energy data fluctuations between the sampling time points. Such substitution by characters of a finite alphabet becomes possible by reducing the originally continuous value range of time derivative values to the finite value range of the discretized time derivative values. Thereby, values that are very close together will get substituted with the same character, enabling structure (pattern) recognition in the string.

In general, a finite alphabet $\Sigma$ is chosen with a computer representation $Y$ of size at least $2M + 1$ (e.g. the characters "a" to "z", "0", and "A" to "Z" if $M \leq 26$). Further, an injection $\sigma: \{-M,..., M\} \rightarrow \Upsilon$ is chosen. The injection defines the mapping between the integral multiples and the characters of the alphabet which is illustrated by table 131. Now the string 600 $S: = ((\sigma \circ f)(\Delta P'_2),..., (\sigma \circ f)(\Delta P'_N)) \in \Upsilon^*$ is generated (here, the operator $\circ$ denotes functional composition). The mapping can be implemented through an injective function avoiding loss of information. This can be achieved by linear mapping functions but also by piecewise linear functions having a high resolution close to 0 and lower resolution above. An example of an injective function is a logarithmic mapping function.

Effectively, S encodes the power fluctuations between sampling times, reducing the actual (infinite) range of values to a finite set of possibilities by rounding each of them to the nearest multiple of *db*. As already explained, since for fluctuations close to zero, that multiple will be zero, this procedure has (among other things) an effect similar to applying a low-pass filter to the derivative P' of the energy or power function P. In the example of FIG. 4D the string 600 which is generated based on discretized time derivative values including the values 501 im at t3, 503im at t4, 504im at t6, 505im at t14, 506im at t15 and the respective 0 values at the remaining sampling time points is: "00DA0a0000000ba0000000". Assuming that 501 im would indicate the start of a single activity pattern corresponding to a single energy consumer (no further energy consumers being active during this time interval) and 506im would indicate the end of the activity pattern, then the signature "DA0a0{7}ba" would directly correspond to the string pattern. In the signature notation 0{n} stands for a sequence of n "0" characters. Other characters in the alphabet can be noted accordingly. This notation corresponds to the notation of regular expressions. This signature would be representative for the activity pattern of the respective energy consumer device. However, in real world scenarios typically multiple signatures from multiple appliances/devices would be included in a string representing an aggregate energy consumption of a plurality of energy consumers being active in the entity.

Briefly turning back to the refrigerator example of FIG. 2A, the characteristics of the shown appliance activity pattern can be summarized as:

- Multi-phase spike of ~120 Watts lasting ~1 minute

- Followed by a quasi-plateau of ~70 Watts lasting ~35 minutes

Now assuming the following configuration for the above described processing steps:

- $\Delta t_i$ = 2 seconds

- Discretization base db= 10 Watts

- Alphabet Y with mapping $\sigma$ being 0 $\rightarrow$ "0", 1 $\rightarrow$ "A", -1 $\rightarrow$ "a", 2 $\rightarrow$ "B", -2 $\rightarrow$ "b", ...

The string S generated from the series of energy data in FIG. 2A has roughly 40 x 60/2 = 1200 characters and a structure like illustrated in the following table::

| # | Character | Explanation |
|---|---|---|
| 1 | L | ΔP' = 120 Watts, "L" ≡ 12 (Upwards spike at beginning) |
| 2 | 0 | Duration of spike, no change in power |
| 3 | 0 | Duration of spike, no change in power |
| ... | ... | ... |
| 30 | f | ΔP' = -60 Watts, "f" ≡ -6 (end of spike, beginning of plateau) |
| 31 | 0 | Duration of plateau, no significant change in power |
| 32 | 0 | Duration of plateau, no significant change in power |
| ... | ... | ... |
| 1200 | f | ΔP' = -60 Watts, "f" ≡ -6 (End of plateau) |

or "L000[...]f000[...]f". This string is precisely matched by the regular expression "L0{28}f0{1179}f".

The pattern recognition component 140 of the system 100 (cf. FIG. 1) can finally apply string pattern matching to the generated string 600 to identify a pattern in the string which matches a predefined signature 150 of a specific energy consuming device EC1 associated with the entity 219. The specific energy consuming device EC1 is finally reported as an identified energy consumer. The reporting may be done through the interface 110 (cf. FIG. 1) to an appropriate output device 300 (cf. FIG. 2). For example, the reporting can occur directly on a display device of a user. The reporting may also occur through the interface in a machine readable format to trigger an alarm in case the output is an appropriate alarm system. For example, alarm rules may be defined that in case the energy consumption of the identified energy consumer exceeds a certain threshold value. Such an alarm may be sent to a user of the system or may be directly forwarded to a control unit which triggers the shutdown of the identified energy consumer if possible. Any other appropriate output format and output device 300 can be chosen by the person skilled in the art for respective application scenarios.

Various string pattern matching approaches may be used, such as for example, string pattern matching based on regular expressions (e.g., Perl Compatible Regular Expressions (PCRE), International Components for Unicode (ICU) Regular Expressions, Boost.Regex), string pattern matching based on program code which encodes the patterns, or string pattern matching based on Fuzzy Regular Expressions (e.g., TRE regexp matching library, AGREP, Fuzzy Regular Expressions for Java (FREJ)). Software implementations of such string pattern matching techniques are fully parallelizable because of the independent computation of the underlying data set. As the discretized time derivative values can be computed independently the substitute characters of the generated string can be computed independently, too. In the example of FIG. 4D the pattern recognition component 140 searches the string 600 with the signature 151 "[CDE][0AB]0[0ab]0 {5,15}[abc][0ab]" (regular expression). The notation of regular expression is to understood in the character in [...] indicate a character signature range wherein each character in string 600 falling into the respective signature range corresponds to a match of the signature with the searched string. In the example the character "D" at t3 matches the signature interval "[CDE]", character "A" matches the signature interval "[0AB]", and so on. The signature portion "0{5,15}" indicates that any sequence of "0" characters between 5 to 15 in the search string 600 will be a match. In other words, the signature can have tolerances. As a consequence, the seven "0" characters will match this part of the signature 151. Assuming again that only one energy consumer is active during the time interval and that the signature 151 is representative of the appliance activity pattern of this energy consumer, then string pattern matching based on regular expressions in this example will detect a match of the searched string pattern 600 with said signature 151.

Turning briefly back to the example of the refrigerator in FIG. 2A and assuming a sampling rate of 0.5 Hz, the following regular expression may be used as a signature for the refrigerator (that is, the refrigerator's compressor):

"[IJKLMNO]0{20,40}[efg]0{1000,1400}[defgh]". This regular expression encodes the following characteristics:

-   Spike of 90-150 Watts lasting 40-80 seconds

-   Followed by a plateau of 20-120 Watts lasting 2000-2800 seconds

This expression therefore matches not only the example pattern but a large number of generalizations of that pattern sharing the same basic properties characteristic of a refrigerator cooling cycle and can be used to enable fuzzy matching for pattern recognition. When the pattern recognition component 140 applies this signature "[IJKLMNO]0{20,40}[efg]0{1000,1400}[defgh]" to a string which is generated based on the aggregate energy measurement data 400 in FIG. 2A it will identify the refrigerator as an energy component being active during the respective time interval. The predefined signatures used by the pattern recognition component describe device specific energy consumption behaviors of the respective energy consumers over time (energy fluctuations). Thereby, as shown by way of example, the device specific signatures can be defined to include tolerances of the behavior (appliance activity patterns), so that, for example, energy spikes are recognized within predefined tolerance intervals. Also the duration (length of the signature) can be defined dynamically.

In case of trying to identify the refrigerator in the aggregate energy measurement data 400 (cf. FIG. 3B), the above signature would probably not lead to the desired result because refrigerator energy data is superimposed with energy data from two other devices. Thus, the interval indicating a series of "0= values would not be present as described in the above signature and the refrigerator would not be identified as an energy consumer. To overcome this problem, a signature may include placeholders for less significant portions of the signature. A device specific energy pattern is characterized more by spikes or edges in the signal than by periods where the signal remains substantially constant. Therefore, placeholders may be used for such portions of the signature where the signal remains substantially constant, that is, where the discretized time derivative values are "0". For example, in PCRE the placeholder symbol is ".". As a consequence the above signature for the refrigerator identification can be modified accordingly by using placeholders resulting in: "[IJKLMNO].{20,40}[efg].{1000,1400}[defgh]". This slight modification of the signature makes the string pattern matching robust versus aggregate energy data of multiple energy consumers by focusing on the more characteristic portions of the signature and allows to identify a particular energy consumer in the entity out of a plurality of energy consumers which have overlapping activity periods.

In one embodiment, the string pattern search may be directed to individual portions of a device specific signature wherein each portion of the signature characterizes the beginning of a particular phase of a full device cycle. For example, the pattern recognition component may only search for the signature portion of the refrigerator which is characteristic for the start of the cooling cycle, that is, the signature portion describing the initial multi-phase spike and the beginning of the quasi plateau. In the case of a washing machine multiple characteristic signature portions may exist being characteristic of different phases of a washing program. If one or more portions of a complete device specific signature are already sufficient to identify a respective energy consuming device the disclosed pattern recognition component can also be used to identify energy consumers while they are in progress. In other words, an energy consuming device can already be identified by the suggested computer system before the full device cycle is completed.

Further, as a consequence, pattern searches performed on the string can be limited to any string size. There is no need to process the full data set. It is sufficient to analyze a limited time history for recognizing a pattern which corresponds to a signature. The signature thereby can provide information about a maximum time interval to be analyzed. Further, it is possible continue a string pattern search where a previous string pattern search has stopped. The linear time complexity in N makes the pattern recognition component computationally inexpensive. Using regular expressions in a finite state machine (pattern recognition component) has the technical effect that the required time for match detection is linear to the number of inner states of the finite state machine and therefore linear with the number of aggregate measurement data. In other words, assume the system is searching for a pattern that has a maximum matching length of N (can be determined from the regular expression). When the string was of length M>>N, there was no match for the pattern. Now the dataset has grown, and the string is now of length K>M. The pattern recognition component can now start the search for the pattern in the new part of the string at position M-N+1, since if there was a match for the pattern before that position, it would already have been found in the first search.

The regular expression-based matching approach can be made even more powerful for such hierarchical scenarios through the use of a Domain-Specific Language specified by means of a formal substitution grammar. The characteristics of an energy consumer (e.g., appliance) that a human may recognize may include multiple independent patterns that together characterize the operation of the appliance. Turning back to the example of FIG. 2B, the system 100 can use hierarchical signatures to reflect the appliance activity patterns of complex energy consumers having multiple sub-components like the washing machine 230 having the sub-components water heater 231 for preparing hot water, pump 232 for cycling the water and an electrical motor 233 for spinning the drum. Each of the subcomponents is an energy consumer on its own. While the entire operation of the washing machine is difficult to describe using simple regular expressions as previously disclosed, the individual sub-components inside of it are usually quite easy to capture.

As they work in a coordinated manner within the washing machine certain, for example, washing program dependent signatures for the sub-components may be defined, which can finally be composed into aggregate signatures for the washing machine 230 reflecting the various washing programs or modes. This can be implemented by using a formal grammar allowing to parameterize patterns and use them as constituents of other patterns, enabling hierarchies of complexity to be constructed while remaining easy to read and maintain for a human operator.

As an example for a formal grammar, consider the following listing for the example of the refrigerator:

```
DiscreteTime[seconds] := (seconds/2)


Inactivity[min,max] := "0{" . DiscreteTime[min] . ","

                     . DiscreteTime[max] . "}"



Refrigerator := "[IJKLMNO]" . Inactivity[40,80] . "[efg]"

            . Inactivity[2000,2800] . "[defgh]"
```

The pattern Refrigerator replicates the regular expression shown above, but is defined in a (semi-)semantic manner using the semantic function Inactivity (and, by consequence, DiscreteTime). By recursive substitution, a pattern defined thus can be converted to a standard regular expression which may be searched for with any regular expression software library.

Recursive semantic definitions greatly simplify the construction of signatures for complex patterns. Their usefulness is not limited to appliances: A meta-pattern OwnerAtHome could for example comprise several appliances that are typically associated with human household activity, extending appliance recognition to behavior recognition.

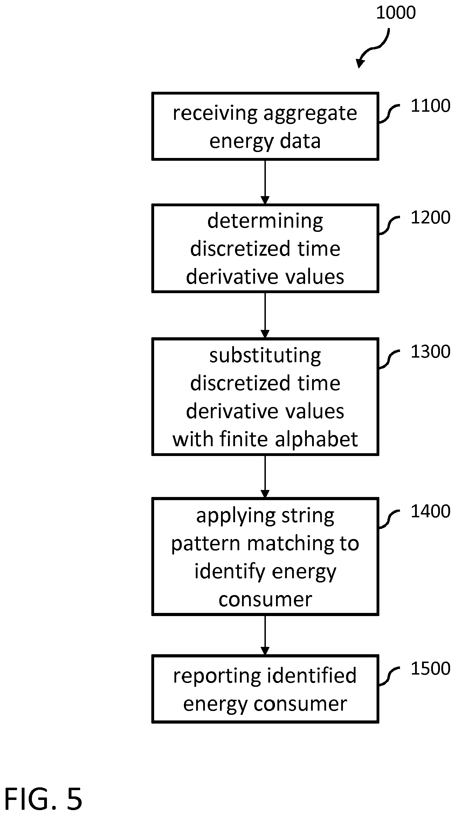

FIG. 5 is a simplified flowchart of a computer implemented method 1000 according to an embodiment of the invention. The computer implemented method 1000 can be executed by the components of the computer system as disclosed above. The computer implemented method 1000 for identifying energy consumers includes receiving 1100 at a sampling rate a series of aggregate energy measurement data associated with an entity. The series of measurement data reflects aggregate energy values over time in relation to energy consuming devices associated with the entity. The method then determines 1200 a discretized time derivative value of the series of measurement data for each sampling time point and substitutes 1300 each discretized time derivative value with a corresponding character of a finite alphabet. Thereby, a string is generated which encodes energy data fluctuations between the sampling time points. Then, the method applies 1400 string pattern matching to the generated string to identify a pattern in the string which matches a predefined signature of a specific energy consuming device (EC1) associated with the entity (210). The predefined signature can include a range of possible values for a characteristic portion of the signature and a series of placeholders for a portion of the signature corresponding to a time period where the specific energy consuming device shows substantially constant energy consumption. in other words, the signature can be defined in such a way that the string pattern matching step is more sensitive regarding the recognition of device specific energy consumption changes over time and less sensitive regarding periods where the energy consumption of the energy consuming device is substantially constant, and, therefore less characteristic for the energy consumer. Finally, the method reports the specific energy consuming device as an identified energy consumer.

The signature description can include by means of a formal grammar a plurality of sub-signatures. Each sub-signature may correspond to a component of a particular energy consumer. In such an embodiment the method 1000 can further include recursively substituting the sub-signatures with respective patterns to compose the signature of the particular energy consumer.

The method 1000 can also benefit from parallelized system architectures by executing the determining 1200, substituting 1300, and/or applying 1400 steps in parallel. In one embodiment, the applying 1400 string pattern matching is based on regular expressions.

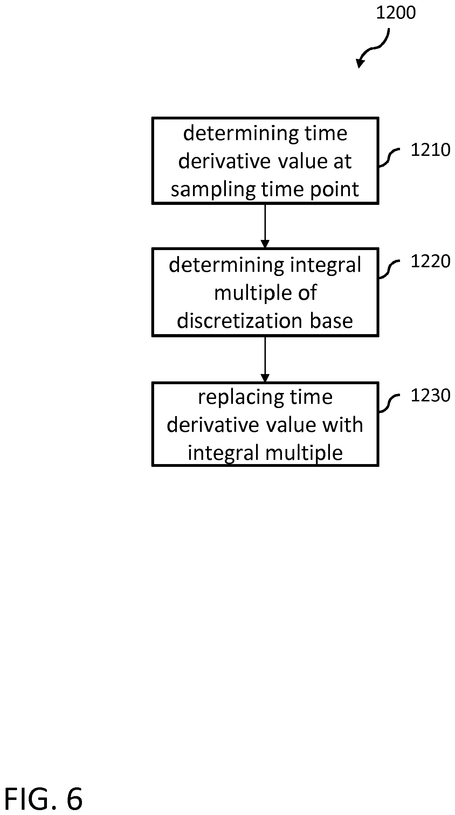

FIG. 6 is a simplified breakdown of the determining step 1200 of the computer implemented method 1000 according to and embodiment of the invention. The determining 1200 step may further include: determining 1210 a particular time derivative value at the particular sampling time point as a difference between the amplitude of the aggregate energy value at the particular sampling time point and the amplitude of the aggregate energy value at the preceding sampling time point; then determining 1220 an integral multiple of a selected discretization base, the integral multiple being a closest to the particular time derivative value, and replacing 1230 the particular time derivative value with the determined integral multiple of the predefined discretization base as the particular discretized time derivative value

A person skilled in the art will understand the functional features disclosed in the context of the embodiments of the computer system as being implemented as a set of instructions of a computer program product that when executed by one or more processors of the computer system will perform the steps of the computer implemented method 1000. Thereby it is to be noted that some features of the computer system are not explicitly described in the description of FIGs. 5 and 6 in the context of the method 1000 but that a skilled person nevertheless will unambiguously derive from the computer system description how to implement those features in the computer program product and the computer implemented method.

Method steps of the invention can be performed by one or more programmable processors executing a computer program to perform functions of the invention by operating on input data and generating output. Method steps can also be performed by, and apparatus of the invention can be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processors of any kind of digital computing device. Generally, a processor will receive instructions and data from a read-only memory or a random access memory or both. The essential elements of a computer are at least one processor for executing instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. Such storage devices may also provisioned on demand and be accessible through the Internet (Cloud Computing). Information carriers suitable for embodying computer program instructions and data include all forms of non-volatile memory, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in special purpose logic circuitry.

To provide for interaction with a user, the invention can be implemented on a computer having a display device, e.g., a cathode ray tube (CRT) or liquid crystal display (LCD) monitor, for displaying information to the user and an input device such as a keyboard, touchscreen or touchpad, a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input.

The invention can be implemented in a computing system that includes a back-end component, e.g., as a data server, or that includes a middleware component, e.g., an application server, or that includes a front-end component, e.g., a client computer having a graphical user interface or a Web browser through which a user can interact with an implementation of the invention, or any combination of such back-end, middleware, or front-end components. Client computers can also be mobile devices, such as smartphones, tablet PCs or any other handheld computing device. The components of the system can be interconnected by any form or medium of digital data communication, e.g., a communication network. Examples of communication networks include a local area network (LAN) and a wide area network (WAN), e.g., the Internet or wireless LAN or telecommunication networks.

The computing system can include clients and servers. A client and server are generally remote from each other and typically interact through a communication network. The relationship of client and server arises by virtue of computer programs running on the respective computers and having a client-server relationship to each other.

**Claims**

1. A computer system (100) for identifying energy consumers in Non-Intrusive Appliance Load Monitoring, comprising:

   an interface component (110) configured to receive at a sampling rate a series (400, 401) of aggregate energy measurement data associated with an entity (210), the series (400, 401) of measurement data reflecting aggregate energy values over time in relation to energy consuming devices (EC1, EC2, ECn) associated with the entity (210) wherein energy measurement data is data that is transformable into power data including power data itself and all of its integrals and derivatives;
   a transformation component (120) configured to determine a discretized time derivative value (501 im, 502im, 504im, 505im, 506im) of the series (400, 401) of measurement data for each sampling time point wherein one discretized time derivative value at a first sampling time point is computed completely independently from another discretized time derivative value at a second sampling time point by:

      determining a particular time derivative value (501) at the respective sampling time point as a difference between the amplitude of the aggregate energy value (401) at the respective sampling time point and the amplitude of the aggregate energy value (401) at the preceding sampling time point;
      determining an integral multiple (501 im) of a selected discretization base (500), the integral multiple (501 im) being a closest to the particular time derivative value (501); and
      replacing the particular time derivative value (501) with the determined integral multiple (501 im) of the predefined discretization base (500) as the particular discretized time derivative value (501 im);

a substitution component (130) configured to substitute each discretized time derivative value with a corresponding character of a finite alphabet, thus generating a string (600) encoding energy data fluctuations between the sampling time points wherein the substitution of both discretized time derivative values are performed in parallel;

a pattern recognition component (140) configured to apply string pattern matching to the generated string (600) to identify a pattern in the string (600) which matches a predefined signature (150) of a specific energy consuming device (EC1) associated with the entity (210) wherein applying string pattern matching is executed in parallel, and configured to report the specific energy consuming device (EC1) as an identified energy consumer; and wherein, in case the energy consumption of the identified energy consumer exceeds a certain threshold value, the interface component (110) is further configured to send an alarm to a user of the computer system, or to forward the alarm to a control unit to trigger the shutdown of the identified energy consumer.

2.  The computer system (100) of claim 1, wherein the pattern recognition component (140) is implemented by modules configured to operate in parallel due to independent computation of the characters of the string (600).

3.  The computer system (100) of any one of the previous claims, wherein a signature description includes a plurality of sub-signatures by means of a formal grammar, each sub-signature corresponding to a component of a particular energy consumer, and wherein the pattern recognition component (140) is further configured to recursively substitute the sub-signatures with respective patterns to compose the signature of the particular energy consumer.

4.  The computer system (100) of any one of the previous claims, wherein string pattern matching is based on regular expressions.

5.  The computer system (100) of any one of the claims 1 to 4, wherein string pattern matching is based on program code encoding patterns.

6.  The computer system (100) of any one of the claims 1 to 4, wherein string pattern matching is based on Fuzzy Regular Expressions.

7.  The computer system (100) of any one of the previous claims, wherein the transformation component (120) is further configured to vary the selected discretization base (500) dependent on an energy range covered by the energy measurement data.

8.  The computer system (100) of any of the previous claims, wherein the predefined signature includes a range of possible values for a characteristic portion of the signature and a series of placeholders for a portion of the signature corresponding to a time period where the specific energy consuming device shows substantially constant energy consumption.

9.  A computer implemented Non-Intrusive Appliance Load Monitoring method (1000) for identifying energy consumers, comprising:

receiving (1100) at a sampling rate a series (400, 401) of aggregate energy measurement data associated with an entity (210), the series (400, 401) of measurement data reflecting aggregate energy values over time in relation to energy consuming devices (EC1, EC2, ECn) associated with the entity (210) wherein energy measurement data is data that is transformable into power data including power data itself and all of its integrals and derivatives;

determining (1200) a discretized time derivative value (501 im, 502im, 504im, 505im, 506im) of the series (400, 401) of measurement data for each sampling time point, wherein one discretized time derivative value at a first sampling time point is computed completely independently from another discretized time derivative value at a second sampling time point by:

determining (1210) a particular time derivative value (501) at a particular sampling time point as a difference between the amplitude of the aggregate energy value (401) at the particular sampling time point and the amplitude of the aggregate energy value (401) at the preceding sampling time point;

determining (1220) an integral multiple (501 im) of a selected discretization base (500), the integral multiple (501 im) being a closest to the particular time derivative value (501);

replacing (1230) the particular time derivative value (501) with the determined integral multiple (501 im) of the predefined discretization base (500) as the particular discretized time derivative value (501 im);

substituting (1300) each discretized time derivative value with a corresponding character of a finite alphabet, thus generating a string (600) encoding energy data fluctuations between the sampling time points, wherein the substitution of both discretized time derivative values are performed in parallel;

applying (1400) string pattern matching to the generated string (600) in parallel to identify a pattern in the string (600) which matches a predefined signature (150) of a specific energy consuming device (EC1) associated with the entity (210); and

reporting (1500) the specific energy consuming device (EC1) as an identified energy consumer by sending an alarm to a user of the computer system, or by forwarding the alarm to a control unit to trigger the shutdown of the identified energy consumer, in case the energy consumption of the identified energy consumer exceeds a certain threshold value.

10. The computer implemented method (1000) of claim 9, wherein a signature description includes by means of a formal grammar a plurality of sub-signatures, each sub-signature corresponding to a component of a particular energy consumer, the method further comprising:

recursively substituting the sub-signatures with respective patterns to compose the signature of the particular energy consumer.

11. The computer implemented method (1000) of any one of the claims 9 to 10, wherein the determining (1200), substituting (1300) and applying (1400) steps are executed in parallel.

12. The computer implemented method (1000) of any one of the claims 9 to 11, wherein the applying (1400) string pattern matching is based on regular expressions.

13. A computer program product that when loaded into a memory of a computing device and executed by at least one processor of the computing device executes the steps of the computer implemented method according to any one of the claims 9 to 12.

**Patentansprüche**

1. Computersystem (100) zum Ermitteln von Energieverbrauchern bei nichtintrusiver Gerätelastüberwachung, umfassend

eine Schnittstellenkomponente (110) eingerichtet zum Empfang einer Reihe (400, 401) von aggregierten Energiemessdaten bei einer Abtastrate in Verbindung mit einer Einheit (210), wobei die Reihe (400, 401) von Messdaten die aggregierten Energiewerte über einen Zeitraum in Bezug zu energieverbrauchenden Geräten (EC1, EC2, ECn) in Verbindung mit der Einheit (210) widerspiegelt, wobei es sich bei den Energiemessdaten um Daten handelt, die in Leistungsdaten einschließlich der Leistungsdaten selbst und aller Integrale und Ableitungen umwandelbar sind;

eine Transformationskomponente (120) eingerichtet zum Ermitteln eines diskretisierten Zeitableitungswerts (501 im, 502im, 504im, 505im, 506im) der Reihe (400, 401) von Messdaten für jeden Abtastzeitpunkt, wobei ein diskretisierter Zeitableitungswert bei einem ersten Abtastzeitpunkt vollkommen unabhängig von einem anderen diskretisierten Zeitableitungswert bei einem zweiten Abtastzeitpunkt berechnet wird durch:

Ermitteln eines bestimmten Zeitableitungswerts (501) zum jeweiligen Abtastzeitpunkt als Differenz zwischen der Amplitude des aggregierten Energiewerts (401) zum jeweiligen Abtastzeitpunkt und der Amplitude des aggregierten Energiewerts (401) zum vorherigen Abtastzeitpunkt;

Ermitteln eines ganzzahligen Vielfachen (501 im) einer ausgewählten Diskretisierungsbasis (500), wobei das ganzzahlige Vielfache (501 im) am nächsten bei dem bestimmten Zeitableitungswert (501) liegt; und

Ersetzen des bestimmten Zeitableitungswerts (501) durch das ermittelte ganzzahlige Vielfache (501 im) der vordefinierten Diskretisierungsbasis (500) als bestimmten diskretisierten Zeitableitungswert (501 im);

eine Substitutionskomponente (130), derart eingerichtet, dass jeder diskretisierte Zeitableitungswert durch ein entsprechendes Zeichen aus einem endlichen Alphabet ersetzt wird, wodurch eine Zeichenkette (600) erzeugt wird, die Energiedatenschwankungen zwischen den Abtastzeitpunkten verschlüsselt, wobei die Ersetzung beider diskretisierten Zeitableitungswerte gleichzeitig erfolgt;

eine Mustererkennungskomponente (140), derart eingerichtet, dass ein Zeichenketten-Musterabgleich zur erzeugten Zeichenkette (600) zum Ermitteln eines Musters in der Zeichenkette (600) angewendet werden kann, die mit einer vordefinierten Signatur (150) eines spezifischen energieverbrauchenden Gerätes (EC1) in Verbindung mit der Einheit (210) übereinstimmt, wobei gleichzeitiges Anwenden eines Zeichenketten-Musterabgleichs durchgeführt wird, und so eingerichtet ist, dass das spezifische energieverbrauchende Gerät (EC1) als ermittelter Energieverbraucher gemeldet wird; und

wobei, wenn der Energieverbrauch des ermittelten Energieverbrauchers einen bestimmten Schwellenwert überschreitet, die Schnittstellenkomponente (110) ferner so eingerichtet ist, dass sie einen Alarm an einen Benutzer des Computersystems sendet oder den Alarm an eine Steuereinheit weiterleitet, um die Abschaltung des ermittelten Energieverbrauchers auszulösen.

2. Computersystem (100) nach Anspruch 1, wobei die Mustererkennungskomponente (140) durch Module umgesetzt wird, die so eingerichtet sind, dass sie gleichzeitig durch die unabhängige Berechnung der Zeichen der Zeichenkette (600) betrieben werden kann.

3. Computersystem (100) nach einem der vorhergehenden Ansprüche, wobei eine Signaturbeschreibung eine Vielzahl von Untersignaturen mittels einer formalen Grammatik enthält und jede Untersignatur einer Komponente eines bestimmten Energieverbrauchers entspricht, und wobei die Mustererkennungskomponente (140) ferner so eingerichtet ist, dass sie rekursiv die Untersignaturen durch entsprechende Muster ersetzt, um die Signatur des bestimmten Energieverbrauchers zu erstellen.

4. Computersystem (100) nach einem der vorhergehenden Ansprüche, wobei Zeichenketten-Musterabgleich auf regulären Ausdrücken basiert.

5. Computersystem (100) nach einem der Ansprüche 1 bis 4, wobei Zeichenketten-Musterabgleich auf Mustern basiert, die den Programmcode verschlüsseln.

6. Computersystem (100) nach einem der Ansprüche 1 bis 4, wobei Zeichenketten-Musterabgleich auf unscharfen regulären Ausdrücken basiert.

7. Computersystem (100) nach einem der vorhergehenden Ansprüche, wobei die Transformationskomponente (120) ferner so eingerichtet ist, dass die ausgewählte Diskretisierungsbasis (500) in Abhängigkeit von einem Energiebereich geändert wird, der durch die Energiemessdaten abgedeckt ist.

8. Computersystem (100) nach einem der vorhergehenden Ansprüche, wobei die vordefinierte Signatur eine Reihe von möglichen Werten für einen typischen Teil der Signatur und eine Reihe von Platzhaltern für einen Teil der Signatur enthält, der einem Zeitraum entspricht, für den das spezifische energieverbrauchende Gerät einen wesentlich konstanten Energieverbrauch aufweist.

9. Computerimplementiertes Verfahren (1000) zum Ermitteln von Energieverbrauchern bei nichtintrusiver Gerätelastüberwachung, umfassend:

Empfangen (1100) einer Reihe (400, 401) von aggregierten Energiemessdaten bei einer Abtastrate in Verbindung mit einer Einheit (210), wobei die Reihe (400, 401) von Messdaten die aggregierten Energiewerte über einen Zeitraum in Bezug zu energieverbrauchenden Geräten (EC1, EC2, ECn) in Verbindung mit der Einheit (210) widerspiegelt, wobei es sich bei den Energiemessdaten um Daten handelt, die in Leistungsdaten einschließlich der Leistungsdaten selbst und aller Integrale und Ableitungen umwandelbar sind;
Ermitteln (1200) eines diskretisierten Zeitableitungswerts (501 im, 502im, 504im, 505im, 506im) der Reihe (400, 401) von Messdaten für jeden Abtastzeitpunkt, wobei ein diskretisierter Zeitableitungswert bei einem ersten Abtastzeitpunkt vollkommen unabhängig von einem anderen diskretisierten Zeitableitungswert bei einem zweiten Abtastzeitpunkt berechnet wird durch:

Ermitteln (1210) eines bestimmten Zeitableitungswerts (501) bei einem bestimmten Abtastzeitpunkt als Differenz zwischen der Amplitude des aggregierten Energiewerts (401) zum bestimmten Abtastzeitpunkt und der Amplitude des aggregierten Energiewerts (401) zum vorherigen Abtastzeitpunkt;
Ermitteln (1220) eines ganzzahligen Vielfachen (501 im) einer ausgewählten Diskretisierungsbasis (500), wobei das ganzzahlige Vielfache (501 im) am nächsten bei dem bestimmten Zeitableitungswert (501) liegt;
Ersetzen (1230) des bestimmten Zeitableitungswerts (501) mit dem ermittelten ganzzahligen Vielfachen (501 im) der vorgegebenen Diskretisierungsbasis (500) als bestimmten diskretisierten Zeitableitungswert (501 im);

Ersetzen (1300) jedes diskretisierten Zeitableitungswerts durch ein entsprechendes Zeichen aus einem endlichen Alphabet, wodurch eine Zeichenkette (600) erzeugt wird, die Energiedatenschwankungen zwischen den Abtastzeitpunkten verschlüsselt, wobei die Ersetzung beider diskretisierten Zeitableitungswerte gleichzeitig erfolgt;

Anwenden (1400) eines Zeichenketten-Musterabgleichs auf die erzeugte Zeichenkette (600) gleichzeitig zum Ermitteln eines Musters in der Zeichenkette (600), die mit einer vordefinierten Signatur (150) eines spezifischen energieverbrauchenden Gerätes (EC1) in Verbindung mit der Einheit (210) übereinstimmt; und

Melden (1500) des spezifischen energieverbrauchenden Gerätes (EC1) als einen ermittelten Energieverbraucher durch Senden eines Alarms an einen Benutzer des Computersystems oder durch Weiterleiten des Alarms an eine Steuereinheit, um die Abschaltung des ermittelten Energieverbrauchers auszulösen, falls der Energieverbrauch des ermittelten Energieverbrauchers einen bestimmten Schwellenwert überschreitet.

10. Computerimplementiertes Verfahren (1000) nach Anspruch 9, wobei eine Signaturbeschreibung mittels einer formalen Grammatik eine Vielzahl von Untersignaturen enthält, wobei jede Untersignatur einer Komponente eines bestimmten Energieverbrauchers entspricht, wobei das Verfahren ferner umfasst:

rekursives Ersetzen der Untersignaturen durch entsprechende Muster, um die Signatur des bestimmten Energieverbrauchers zu erstellen.

11. Computerimplementiertes Verfahren (1000) nach einem der Ansprüche 9 bis 10, wobei die Schritte des Ermittelns (1200), Ersetzens (1300) und Anwendens (1400) gleichzeitig erfolgen.

12. Computerimplementiertes Verfahren (1000) nach einem der Ansprüche 9 bis 11, wobei das Anwenden (1400) des Zeichenketten-Musterabgleichs auf regulären Ausdrücken basiert.

13. Computerprogrammprodukt, das beim Laden in einen Speicher eines Computergeräts und beim Ausführen durch mindestens einen Prozessor des Computergeräts die Schritte des computerimplementierten Verfahrens nach einem der Ansprüche 9 bis 12 ausführt.

**Revendications**

1. Système informatique (100) pour identifier des consommateurs d'énergie dans la surveillance de charge d'appareils non intrusifs, comprenant :

un composant d'interface (110) configuré pour recevoir à une fréquence d'échantillonnage une série (400, 401) de données de mesure d'énergie globales associées à une entité (210), la série (400, 401) de données de mesure reflétant des valeurs d'énergie globales dans le temps en rapport avec des dispositifs consommateurs d'énergie (EC1, EC2, ECn) associés à l'entité (210), dans lequel les données de mesure d'énergie sont des données pouvant être transformées en données de puissance, y compris les données de puissance elles-mêmes et toutes leurs intégrales et dérivées ;

un composant de transformation (120) configuré pour déterminer une valeur dérivée temporelle discrétisée (501 im, 502im, 504im, 505im, 506im) de la série (400, 401) de données de mesure pour chaque point temporel d'échantillonnage dans lequel une valeur dérivée temporelle discrétisée à un premier point temporel d'échantillonnage est calculée complètement indépendamment d'une autre valeur dérivée temporelle discrétisée à un second point temporel d'échantillonnage :

en déterminant une valeur dérivée temporelle particulière (501) au point temporel d'échantillonnage respectif en tant que différence entre l'amplitude de la valeur d'énergie globale (401) au point temporel d'échantillonnage respectif et l'amplitude de la valeur d'énergie globale (401) au point temporel d'échantillonnage précédent ;

en déterminant un multiple intégral (501im) d'une base de discrétisation sélectionnée (500), le multiple intégral (501 im) étant le plus proche de la valeur dérivée temporelle particulière (501) ; et

en remplaçant la valeur dérivée temporelle particulière (501) par le multiple intégral déterminé (501 im) de la base de discrétisation prédéfinie (500) en tant que valeur dérivée temporelle discrétisée particulière (501 im) ;

un composant de substitution (130) configuré pour substituer chaque valeur dérivée temporelle discrétisée par un caractère correspondant d'un alphabet fini, générant ainsi une chaîne (600) codant des fluctuations de données d'énergie entre les points temporels d'échantillonnage dans lequel la substitution des deux valeurs dérivées temporelles discrétisées est effectuée en parallèle ;

un composant de reconnaissance de motif (140) configuré pour appliquer une correspondance de motif de chaîne à la chaîne générée (600) pour identifier un motif dans la chaîne (600) qui correspond à une signature prédéfinie (150) d'un dispositif consommateur d'énergie spécifique (EC1) associé à l'entité (210) dans lequel l'application d'une correspondance de motif de chaîne est exécutée en parallèle et configurée pour signaler le dispositif consommateur d'énergie spécifique (EC1) en tant que consommateur d'énergie identifié ; et

dans lequel, dans le cas où la consommation d'énergie du consommateur d'énergie identifié dépasse une certaine valeur seuil, le composant d'interface (110) est en outre configuré pour envoyer une alarme à un utilisateur du système informatique, ou pour transmettre l'alarme à une unité de commande pour déclencher l'arrêt du consommateur d'énergie identifié.

2. Système informatique (100) selon la revendication 1, dans lequel le composant de reconnaissance de motif (140) est implémenté par des modules configurés pour fonctionner en parallèle du fait du calcul indépendant des caractères de la chaîne (600).

3. Système informatique (100) selon l'une quelconque des revendications précédentes, dans lequel une description de signature comprend une pluralité de sous-signatures au moyen d'une grammaire formelle, chaque sous-signature correspondant à un composant d'un consommateur d'énergie particulier, et dans lequel le composant de reconnaissance de motif (140) est en outre configuré pour substituer de façon récursive les sous-signatures par des motifs respectifs pour composer la signature du consommateur d'énergie particulier.

4. Système informatique (100) selon l'une quelconque des revendications précédentes, dans lequel la correspondance de motif de chaîne est basée sur des expressions régulières.

5. Système informatique (100) selon l'une quelconque des revendications 1 à 4, dans lequel la correspondance de motif de chaîne est basée sur des motifs de codage de code de programme.

6. Système informatique (100) selon l'une quelconque des revendications 1 à 4, dans lequel la correspondance de motif de chaîne est basée sur des expressions régulières floues.

7. Système informatique (100) selon l'une quelconque des revendications précédentes, dans lequel le composant de transformation (120) est en outre configuré pour faire varier la base de discrétisation sélectionnée (500) en fonction d'une plage d'énergie couverte par les données de mesure d'énergie.

8. Système informatique (100) selon l'une quelconque des revendications précédentes, dans lequel la signature prédéfinie comprend une plage de valeurs possibles pour une partie caractéristique de la signature et une série de substituants pour une partie de la signature correspondant à une période où le dispositif consommateur d'énergie spécifique présente une consommation d'énergie sensiblement constante.

9. Procédé de surveillance de charge d'appareils non intrusifs implémenté par ordinateur (1000) pour identifier des consommateurs d'énergie, comprenant :

la réception (1100) à une fréquence d'échantillonnage d'une série (400, 401) de données de mesure d'énergie globales associées à une entité (210), la série (400, 401) de données de mesure reflétant des valeurs d'énergie globales dans le temps par rapport aux dispositifs consommateurs d'énergie (EC1, EC2, ECn) associés à l'entité (210) dans lequel les données de mesure d'énergie sont des données pouvant être transformées en données de puissance, y compris les données de puissance elles-mêmes et toutes leurs intégrales et dérivées ;

la détermination (1200) d'une valeur dérivée temporelle discrétisée (501im, 502im, 504im, 505im, 506im) de la série (400, 401) de données de mesure pour chaque point temporel d'échantillonnage, dans lequel une valeur dérivée temporelle discrétisée à un premier point temporel d'échantillonnage est calculée complètement indépendamment d'une autre valeur dérivée temporelle discrétisée à un second point temporel d'échantillonnage :

en déterminant (1210) une valeur dérivée temporelle particulière (501) à un point temporel d'échantillonnage particulier en tant que différence entre l'amplitude de la valeur d'énergie globale (401) au point temporel d'échantillonnage particulier et l'amplitude de la valeur d'énergie globale (401) au point temporel d'échantillonnage précédent ;

en déterminant (1220) un multiple intégral (501 im) d'une base de discrétisation sélectionnée (500), le multiple intégral (501 im) étant le plus proche de la valeur dérivée temporelle particulière (501) ;

en remplaçant (1230) la valeur dérivée temporelle particulière (501) par le multiple intégral déterminé (501 im) de la base de discrétisation prédéfinie (500) en tant que valeur dérivée temporelle discrétisée particulière (501 im) ;

la substitution (1300) de chaque valeur dérivée temporelle discrétisée par un caractère correspondant d'un alphabet fini, générant ainsi une chaîne (600) codant des fluctuations de données d'énergie entre les points temporels d'échantillonnage, dans lequel la substitution des deux valeurs dérivées temporelles discrétisées est effectuée en parallèle ;

l'application (1400) d'une correspondance de motif de chaîne à la chaîne générée (600) en parallèle pour identifier un motif dans la chaîne (600) qui correspond à une signature prédéfinie (150) d'un dispositif consommateur d'énergie spécifique (EC1) associé à l'entité (210) ; et

le fait de signaler (1500) le dispositif consommateur d'énergie spécifique (EC1) en tant que consommateur d'énergie identifié en envoyant une alarme à un utilisateur du système informatique ou en transmettant l'alarme à une unité de commande pour déclencher l'arrêt du consommateur d'énergie identifié, dans le cas où la consommation d'énergie du consommateur d'énergie identifié dépasse une certaine valeur seuil.

10. Procédé implémenté par ordinateur (1000) selon la revendication 9, dans lequel une description de signature comprend, au moyen d'une grammaire formelle, une pluralité de sous-signatures, chaque sous-signature correspondant à un composant d'un consommateur d'énergie particulier, le procédé comprenant en outre :

la substitution de façon récursive des sous-signatures par des motifs respectifs pour composer la signature du consommateur d'énergie particulier.

11. Procédé implémenté par ordinateur (1000) selon l'une quelconque des revendications 9 à 10, dans lequel les étapes de détermination (1200), de substitution (1300) et d'application (1400) sont exécutées en parallèle.

12. Procédé implémenté par ordinateur (1000) selon l'une quelconque des revendications 9 à 11, dans lequel l'application (1400) de la correspondance de motif de chaîne est basée sur des expressions régulières.

13. Produit de programme informatique qui, lorsqu'il est chargé dans une mémoire d'un dispositif informatique et exécuté par au moins un processeur du dispositif informatique, exécute les étapes du procédé implémenté par ordinateur selon l'une quelconque des revendications 9 à 12.

FIG. 1

FIG. 2A

FIG. 2B

power/W

FIG. 3A

power/W

FIG. 3B

FIG. 4A

FIG. 4B

FIG. 4C

P′

501im

502im

504im

505im

506im

time

131

| multiple of db | ... | -3 | -2 | -1 | 0 | 1 | 2 | 3 | 4 | ... |
|---|---|---|---|---|---|---|---|---|---|---|
| character | ... | c | b | a | 0 | A | B | C | D | ... |

130

600

00DA0a0000000ba0000000

"DA0a0{7}ba"

140

151

"[CDE][0AB]0[0ab]0{5,15}[abc][0ab]"

FIG. 4D

1000

```
┌─────────────────────┐
│  receiving aggregate │  1100
│     energy data      │
└─────────────────────┘
           │
           ▼
┌─────────────────────┐
│     determining      │  1200
│   discretized time   │
│   derivative values  │
└─────────────────────┘
           │
           ▼
┌─────────────────────┐
│     substituting     │  1300
│   discretized time   │
│   derivative values  │
│  with finite alphabet│
└─────────────────────┘
           │
           ▼
┌─────────────────────┐
│    applying string   │  1400
│  pattern matching to │
│    identify energy   │
│       consumer       │
└─────────────────────┘
           │
           ▼
┌─────────────────────┐
│  reporting identified│  1500
│    energy consumer   │
└─────────────────────┘
```

FIG. 5

1200

```
determining time
derivative value at      ⌐ 1210
sampling time point
        │
        ▼
determining integral
multiple of              ⌐ 1220
discretization base
        │
        ▼
replacing time
derivative value with    ⌐ 1230
integral multiple
```

FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2013158901 A1